# EUROPÄISCHE PATENTSCHRIFT

(11) **EP 1 193 583 B1**
(45) Veröffentlichungstag und Bekanntmachung des Hinweises auf die Patenterteilung: **02.04.2003**
(21) Anmeldenummer: 01120388.2
(22) Anmeldetag: 25.08.2001
(51) Int. Cl.: G05D 1/02, G06F 17/00, G06F 15/76, B60K 31/18

(54) **Verfahren zur Längsregelung eines Fahrzeuges, bei dem Informationen eines Navigationssystems erfasst werden**
Method of vehicle navigation system
Méthode de guidage d'un véhicule

(30) Priorität: 27.09.2000 DE 10047746
(43) Veröffentlichungstag der Anmeldung: 03.04.2002
(73) Patentinhaber: Bayerische Motoren Werke Aktiengesellschaft, 80809 München (DE)
(72) Erfinder: Steinle, Joachim, Dr., 80993 München (DE); Schraut, Michael, Dr., 80686 München (DE); Prömm, Uwe, 80686 München (DE)

(56) Entgegenhaltungen:
- EP-A- 0 901 929
- US-A- 5 323 321
- US-A- 6 049 749

## Beschreibung

Die Erfindung bezieht sich auf ein Verfahren zur Längsregelung eines Fahrzeuges, bei dem Informationen eines Navigationssystems erfasst werden, nach dem Oberbegriff des Patentanspruchs 1:

Ein derartiges Verfahren zur Längsregelung ist beispielsweise aus der DE 196 38 511 A1 bekannt. Dabei handelt es sich insbesondere um Geschwindigkeitsregelsysteme, die die Antriebs- und/oder Bremssysteme eines Fahrzeuges in der Weise ansteuern, dass entweder eine Sollgeschwindigkeit oder ein Sollabstand zum vorausfahrenden Fahrzeug eingestellt wird. Bei dem aus der DE 196 38 511 A1 bekannten Verfahren werden derartige Geschwindigkeitsregelsysteme mit Informationen eines ebenfalls im Fahrzeug vorhandenen Navigationssystem beliefert. Hierzu kann beispielsweise ein dem Längsregelsystem zugeordnetes Steuergerät eine Schnittstelle zur Elektronik des Navigationssystems aufweisen.

Die bekannten Längsregelsysteme sind bisher so ausgelegt, dass eine automatische Längsbeschleunigung auf die Sollgeschwindigkeit vorgenommen wird, wenn eine Folgefahrt beendet wird. Eine Folgefahrt mit vorgegebenem Sollabstand wird entweder beendet, wenn das vorausfahrende Fahrzeug die Spur wechselt oder wenn das eigene Fahrzeug auf eine freie Spur wechselt. Bisher ist selbst unter Verwendung von Informationen eines Navigationssystems keine verlässliche Erkennung eines Spurwechsels möglich, da erstens die im Navigationssystem abgelegten Straßennetze Fehlertoleranzen aufweisen und zweitens der bisher verwendete Sensor zur Positionsbestimmung des eigenen Fahrzeuges (GPS) noch zu ungenau ist.

Die korrekte Auswertung, ob ein vorausfahrendes Fahrzeug (Zielobjekt) auf der eigenen Spur vorhanden ist oder nicht, kann auch mit der Information von Sensoren zur Abstandsmessung (Radar, Ultraschall, Infrarot sowie Bildverarbeitung) nicht mit ausreichend hoher Wahrscheinlichkeit vorgenommen werden, da der Detektionsbereich (Erfassungswinkel) der Sensoren relativ klein ist.

Es ist Aufgabe der Erfindung, trotzdem unter Verwendung von Informationen des Navigationssystems bestimmte Spurwechselsituationen abzuschätzen.

Diese Aufgabe wird durch die Merkmale des Patentanspruchs 1 gelöst. Vorteilhafte Weiterbildungen der Erfindung sind die Gegenstände der abhängigen Ansprüche.

Besonderes Augenmerk wird beim Gegenstand der Erfindung auf die Spurwechselsituation im Unterschied zur Kurvenfahrt mit Verlust des Zielobjekts ohne Spurwechsel gerichtet.

Erfindungsgemäß wird bei einem Längsregelvorgang aufgrund eines vorgegebenen Sollabstandes zu einem vorausfahrenden Fahrzeug mittels der Informationen des Navigationssystems die Wahrscheinlichkeit ermittelt, mit der das vorausfahrende Fahrzeug und/oder das eigene Fahrzeug eine Kurve befährt, wenn das vorausfahrende Fahrzeug nicht mehr erkannt wird. Eine Längsbeschleunigung wird zeitlich verzögert vorgenommen, wenn die Wahrscheinlichkeit größer als eine vorgegebene Schwelle (variabel oder fest) ist.

Zur Ermittlung der Wahrscheinlichkeit, mit der das vorausfahrende Fahrzeug und/oder das eigene Fahrzeug eine Kurve befährt, wird der Straßentyp (Autobahn, Landstraße; Anzahl und/oder Breite der Spuren einer Straße; Krümmungsgrad des Straßenverlaufs; Abbiegemöglichkeit) ausgewertet Derartige Informationen über den Straßentyp liegen über das Navigationssystem vor.

Zur Ermittlung der Wahrscheinlichkeit, mit der das eigene Fahrzeug eine Kurve befährt, werden ggf. zusätzlich fahrdynamische Größen (Lenkwinkel, Gierrate, Querbeschleunigung) ausgewertet. Derartige Informationen werden über fahrzeuginterne Sensoren ermittelt.

Vorzugsweise wird das erfindungsgemäße Verfahren in ein ohnehin für ein Längsregelsystem vorgesehenes Steuergerät integriert. Hierzu muss lediglich eine Schnittstelle zum Navigationssystem hergestellt werden.

Die erfindungsgemäße Abfrage und Verarbeitung von Informationen aus dem Navigationssystem zum aktuellen und zukünftigen Kontext erlaubt eine adaptive an die jeweilige Situation angepasste und fahrertypische Regelung der Längsdynamik mit einem Längsregelsystem. Die Funktionsqualität und der Fahrkomfort werden gesteigert.

Zur detaillierteren Erläuterung der Erfindung wird auf die Zeichnung verwiesen. Es zeigt
- Fig. 1: einen ersten Streckenabschnitt ohne Kurve und
- Fig. 2: einen zweiten Streckenabschnitt mit Kurve.

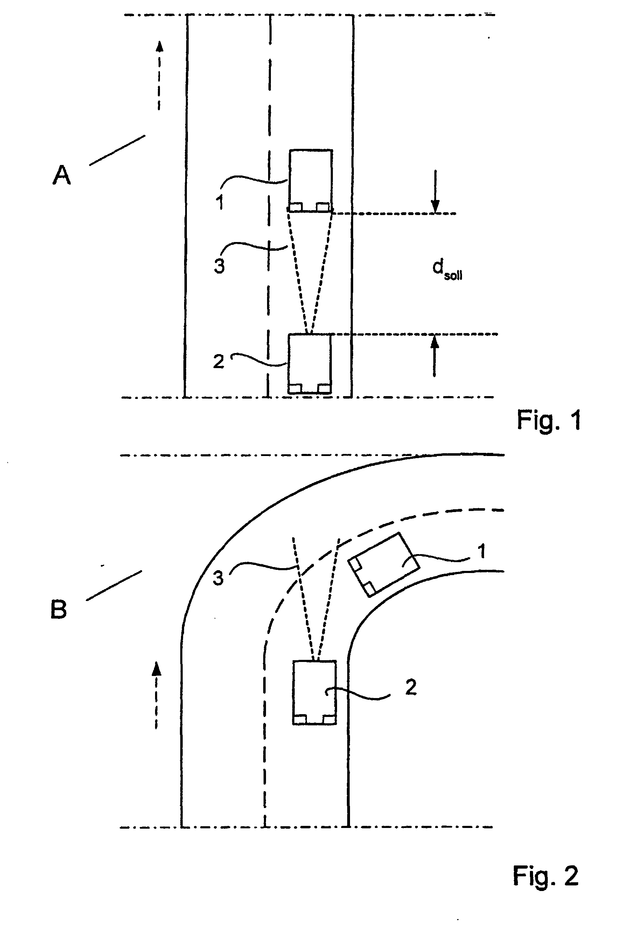

Auf dem Streckenabschnitt A in Fig. 1 (Fahrtrichtung siehe gestrichelter Pfeil) folgt das Fahrzeug 2 mit vorgegebenem Sollabstand dₛₒₗₗ einem vorausfahrenden Fahrzeug 1 (Folgefahrt). Der Detektionsbereich zur Erfassung eines vorausfahrenden Fahrzeuges ist in Form des Erfassungswinkels 3 eingetragen.

Im Streckenabschnitt B in Fig. 2 tritt das vorausfahrende Fahrzeug 1 aus dem Detektionsbereich (Erfassungswinkel 3) aufgrund einer stark gekrümmten Kurve heraus, obwohl sich das Fahrzeug 1 immer noch auf der selben Spur befindet wie das Fahrzeug 2. Ohne die erfindungsgemäße Wahrscheinlichkeitsermittlung würde das Längsregelsystem auf einen Spurwechsel des vorausfahrenden Fahrzeugs 1 oder des eigenen Fahrzeuges 2 schließen, die abstandgeregelte Folgefahrt beenden und ggf. auf eine vorgegebene Sollgeschwindigkeit beschleunigen.

Das im Fahrzeug 2 enthaltene erfindungsgemäße Längsregelsystem hat zu entscheiden, wie groß die Wahrscheinlichkeit w ist, mit der zumindest das vorausfahrende Fahrzeug 1 eine Kurve befährt; denn ein Spurwechsel kann nicht eindeutig erkannt werden. Diese Situation kann sowohl "vor der Kurve" als auch "in der Kurve" auftreten. "Vor der Kurve" bedeutet, dass das vorausfahrende Fahrzeug die Kurve befährt. »In der Kurve" bedeutet, dass zumindest das eigene Fahrzeug 2 die Kurve befährt.

Hierzu wertet ein nicht näher dargestelltes Steuergerät des Längsregelsystems im Fahrzeug 2 zum einen Informationen des Navigationssystems sowie weitere Betriebsgrößen des Fahrzeugs 2 aus. Die Informationen können beispielsweise die Ist-Position des Fahrzeugs 2 und der Straßentyp sein. Der Straßentyp umfasst beispielsweise die Straßenklasse (Autobahn, Landstraße, usw.), die Krümmung des Straßenverlaufs, die Breite und die Anzahl der Spuren der befahrenen Straße und die Abbiegemöglichkeiten. Die Betriebsgrößen können insbesondere die dynamischen Größen (wie z. B. Lenkwinkel, Gierrate, Querbeschleunigung), die Blinkersignale, das Fahrzeuggeschwindigkeitssignal, das Fahrpedalgebersignal oder Betätigungssignale des dem Längsregelsystem zugeordneten Bedienhebels sein.

Wenn das Zielobjekt (hier Fahrzeug 1) nicht mehr im Detektionsbereich 3 liegt, wächst die Wahrscheinlichkeit dafür, dass das Zielobjekt die Fahrspur noch nicht verlassen hat bzw. dass lediglich eine Kurve vorliegt bei nur einspurigen Straßen, bei breiten Spuren, auf kurvigen Landstraßen, je niedriger die zulässige Höchstgeschwindigkeit ist, wenn keine Abbiegemöglichkeit vorlag und je gekrümmter der Straßenverlauf ist. Dagegen kann eine eigene Blinkerbetätigung und/oder ein für einen Spurwechsel charakteristischer Verlauf der fahrdynamischen Größen eher auf einen Spurwechsel des eigenen Fahrzeuges hindeuten als auf Kurvenfahrt.

Proportional zum Verlauf der Wahrscheinlichkeit kann die Längsbeschleunigung mit zunehmender bzw. abnehmender zeitlicher Verzögerung vorgenommen werden. Ist die Wahrscheinlichkeit für eine Kurvenfahrt zumindest nahezu 1, kann die Längsbeschleunigung völlig verhindert werden, auch wenn das vorausfahrende Fahrzeug 1 nicht mehr erkannt wird.

Die zeitliche Verzögerung der Längsbeschleunigung wird verhindert, wenn vom Fahrer der Wunsch über mehr Antriebsleistung erfasst wird (z. B. über das Gaspedal oder über das dem Längsregelsystem zugeordnete Bedienelement zum Erhöhen der Setzgeschwindigkeit).

## Patentansprüche

1. Verfahren zur Längsregelung eines Fahrzeuges, bei dem Informationen eines Navigationssystems erfasst werden und bei dem abhängig von den Informationen des Navigationssystems ein Sollwert mindestens eines Parameters zur Längsregelung bestimmt wird, **dadurch gekennzeichnet, dass** bei einem Längsregelvorgang aufgrund eines vorgegebenen Sollabstandes zu einem vorausfahrenden Fahrzeug (1) mittels der Informationen des Navigationssystems die Wahrscheinlichkeit ermittelt wird, mit der das vorausfahrende Fahrzeug (1) und/oder das eigene Fahrzeug (2) eine Kurve befährt, wenn das vorausfahrende Fahrzeug (1) nicht mehr erkannt wird, und dass eine Längsbeschleunigung zeitlich verzögert vorgenommen wird, wenn die Wahrscheinlichkeit größer als eine vorgegebene variable oder feste Schwelle ist.

2. Verfahren nach Patentanspruch 1, **dadurch gekennzeichnet, dass** zur Ermittlung der Wahrscheinlichkeit, mit der das vorausfahrende Fahrzeug (1) und/oder das eigene Fahrzeug (2) eine Kurve befährt, der Straßentyp ausgewertet wird.

3. Verfahren nach Patentanspruch 1, **dadurch gekennzeichnet, dass** zur Ermittlung der Wahrscheinlichkeit, mit der das eigene Fahrzeug (2) eine Kurve befährt, fahrdynamische Größen ausgewertet werden.

## Claims

1. A method for longitudinal control of a vehicle, whereby information from a navigation system is detected and whereby, dependent upon the information from the navigation system, a target value of at least one parameter for longitudinal control is determined, **characterised in that** in a longitudinal control procedure based on a predetermined target separation from a leading vehicle (1), by means of the information from the navigation system, the probability is determined that the leading vehicle (1) and/or the controlled vehicle (2) is travelling round a curve if the leading vehicle (1) is no longer recognised, and that a longitudinal acceleration is undertaken after a delay if the probability is greater than a predetermined variable or fixed threshold value.

2. A method according to Claim 1, **characterised in that** in order to determine the probability that the leading vehicle (1) and/or the controlled vehicle (2) is travelling round a curve, the road type is evaluated.

3. A method according to Claim 1, **characterised in that** in order to determine the probability that the controlled vehicle (2) is travelling round a curve, dynamic drive variables are evaluated.

## Revendications

1. Procédé de régulation longitudinale d'un véhicule selon lequel on saisit les informations d'un système de navigation et en fonction des informations du système de navigation, on détermine une valeur de consigne d'au moins un paramètre pour réguler longitudinalement,
**caractérisé en ce que**
pour une opération de régulation longitudinale basée sur une distance de consigne prédéterminée par rapport à un véhicule amont (1), à l'aide des informations du système de navigation, la probabilité que le véhicule amont (1) et/ou le véhicule suiveur (2) parcourent une courbe est déterminée quand le véhicule amont (1) n'est plus reconnu, et on commande une accélération longitudinale avec retard si la probabilité est supérieure à un seuil variable ou fixe prédéterminé.

2. Procédé selon la revendication 1,
**caractérisé en ce qu'**
on exploite le type de chaussée pour déterminer la probabilité selon que le véhicule amont (1) et/ou le véhicule suiveur (2) parcourent une courbe.

3. Procédé selon la revendication 1,
**caractérisé en ce qu'**
on exploite des grandeurs liées à la dynamique de roulement pour déterminer la probabilité que le propre véhicule (2) parcourt une courbe.
